# EUROPÄISCHE PATENTANMELDUNG

(11) **EP 1 293 524 A1**
(43) Veröffentlichungstag der Anmeldung: **19.03.2003**
(21) Anmeldenummer: 02019408.0
(22) Anmeldetag: 30.08.2002
(51) Int. Cl.: C08G 18/48

(54) **Verfahren zur Herstellung von reaktionsverzögerten Polyurethanhartschaumstoffen**

(30) Priorität: 14.09.2001 DE 10145439
(71) Anmelder: BASF AKTIENGESELLSCHAFT, 67056 Ludwigshafen (DE)
(72) Erfinder: Falke, Peter, Dr., 01987 Schwarzheide (DE); Knorr, Gottfried, Dr., 49179 Ostercappeln (DE); Seifert, Holger, Dr., 49163 Bohmte (DE)

(57) **Zusammenfassung**

Gegenstand der Erfindung ist ein Verfahren zur Herstellung von reaktionsverzögerten Polyurethanhartschaumstoffen durch Umsetzung von organischen und/oder modifizierten organischen Polyisocyanaten (a) mit einem Polyolgemisch (b) und gegebenenfalls weiteren gegenüber Isocyanaten reaktive Wasserstoffatome aufweisenden Verbindungen (c) in Gegenwart von Wasser (d), Katalysatoren (e), Flammschutzmitteln (f), Treibmitteln (g) und gegebenenfalls weiteren Hilfs- und Zusatzstoffen (h), das dadurch gekennzeichnet ist, dass das Polyolgemisch (b) besteht aus
b1) mindestens einem zwei- bis achtfunktionellen Polyetherol auf der Basis von Ethylenoxid und gegebenenfalls Propylenoxid und/oder Butylenoxid, wobei der Ethylenoxidanteil, bezogen auf die eingesetzte Gesamtmenge an Alkylenoxid, mehr als 30 Gew.-% beträgt, mit einer OH-Zahl von 200 bis 1300 mg KOH/g und
b2) mindestens einem Polyetherol auf der Basis Propylenoxid und/oder Butylenoxid und gegebenenfalls Ethylenoxid mit einer OH-Zahl von 100 bis 1000 mg KOH/g, wobei der Ethylenoxidanteil höchstens 30 Gew.-% beträgt.

Gegenstände der Erfindung sind weiterhin die so hergestellten reaktionsverzögerten Polyurethanhartschaumstoffe selbst sowie deren Verwendung als Isolier-, Konstruktions- und Verpackungsmaterial.

## Beschreibung

Die vorliegende Erfindung betrifft ein Verfahren zur Herstellung von reaktionsverzögerten Polyurethanhartschaumstoffen sowie deren Verwendung als Isolier-, Konstruktions- und Verpackungsmaterial.

Die Herstellung von Polyurethanhartschaumstoffen durch Umsetzung von organischen und/oder modifizierten organischen Polyisocyanaten bzw. Prepolymeren mit höher funktionellen Verbindungen mit mindestens zwei reaktiven Wasserstoffatomen, beispielsweise Polyoxyalkylenpolyaminen und/oder vorzugsweise organischen Polyhydroxylverbindungen, insbesondere Polyetherolen und gegebenenfalls Kettenverlängerungs- und/oder Vernetzungsmitteln in Gegenwart von Katalysatoren, Treibmitteln, Flammschutzmitteln, Hilfsmitteln und/oder Zusatzstoffen ist bekannt und wurde vielfach beschrieben. Eine zusammenfassende Übersicht über die Herstellung von Polyurethanschaumstoffen wird z.B. im Kunststoff-Handbuch, Band VII, "Polyurethane", 1. Auflage 1966, herausgegeben von Dr. R. Vieweg und Dr. A. Höchtlen sowie 2. Auflage, 1983, und 3. Auflage, 1993, jeweils herausgegeben von Dr. G. Oertel (Carl Hanser Verlag, München) gegeben.

Polyurethanhartschaumstoffe finden vorwiegend in der Wärmeund Kälteisolation Anwendung, wie z.B. bei Kühlgeräten, Wasserspeichern, im Bauwesen, bei der Isolierung von Rohren und als Verpackungsmaterial.

Als Treibmittel dienten in der Vergangenheit insbesondere Fluorchlorkohlenwasserstoffe. Aufgrund ihrer zerstörenden Wirkung auf die Ozonschicht wurden andere Treibmittel vorgeschlagen. Dazu gehören neben Hydrofluor- und Fluoralkanen insbesondere Kohlenwasserstoffe, wie Cyclopentan und Pentangemische. Für eine Reihe von Hartschaumanwendungen kann auch Wasser als Treibmittel eingesetzt werden.

Es ist allgemein üblich, aufgrund der hohen Reaktivität keine Hartschaumpolyole mit reaktiven primären OH-Gruppen zu verwenden, da bei den zur Erreichung der mechanischen Eigenschaften erforderlichen Systemzusammensetzung das Fließverhalten stark beeinträchtigt ist. Als Hartschaumpolyole dienen vorwiegend Polyetherole auf Basis von Propylenoxid, da bei Verwendung derartiger Polyole die Systemreaktivität besser gesteuert werden kann. Darauf verweisen beispielsweise ausdrücklich J.M. Buist und H. Gudgeon in Advances in Polyurethane Technology, Maclaren and Sons Ltd, London, 1968, S. 190. Aus diesem Grunde werden Polyetherole mit Ethylenoxid - wenn überhaupt eingesetzt - in der Regel als Ethylenoxidinnenblock oder in untergeordnetem Maße als Nebenbestandteil der Polyolkomponente verwendet.

In EP-A-864602 werden z.B. Hartschaumstoffe mit verringerter Rohdichte, die unter Verwendung von Cyclopentan, weiteren Kohlenwasserstoffen und Wasser hergestellt wurden, beschrieben. Als Polyole werden vorzugsweise Polyetherole auf Basis aromatischer Amine verwendet, die einen OH-Zahl-Bereich von 300 bis 600 mg KOH/g besitzen.

In DE-A-19623065 werden in der Regel Polyetherole auf Basis von Propylenoxid eingesetzt. In geringen Anteilen werden ethylenoxidhaltige Polyole zur Zellöffnung verwendet.

In WO-A-9951655 werden offenzellige Hartschäume beansprucht. Hier finden Prepolymere Anwendung, die unter Einbeziehung von ethylenoxidreichen Polyolen hergestellt worden sind. Daneben werden niedere Polyethylenglykole in der Polyolkomponente verwendet. Diese Maßnahmen zielen darauf ab, hydrophile offenzellige Hartschaumstoffe zu erzeugen.

Offenzellige Hartschäume können nach EP-A-572833 auch unter Verwendung von propylenoxidhaltigen Polyetherolen hergestellt werden. Extrem hohe Wasseranteile führen hier zu offenzelligen Schaumstoffen.

In WO-A-9518163 werden Prepolymere auf Basis von Polyphenylenpolyisocyanat und einem ethylenoxidhaltigen Polyol verwendet. Diese Maßnahme soll dazu dienen, eine verbesserte Haftung an Deckschichten zu erreichen. Als Treibmittel kommen insbesondere anteilig Perfluoralkane zur Anwendung.

In DE-A-19723193 werden Hartschaumstoffe mit einer verringerten Wärmeleitfähigkeit genannt. Die verwendeten Polyole weisen teilweise einen Ethylenoxidinnenblock auf, was insbesondere die Viskosität günstig beeinflussen soll.

In WO-A-9834973 wird ein lediglich für Verpackungszwecke geeigneter Hartschaum beansprucht, der neben Polyolen mit hohen Ethylenoxidanteilen insbesondere Prepolymere mit hohen Anteilen an 4,4'-MDI verwendet.

In EP-A-582127 werden hydrophile Hartschäume beschrieben, die als Blumensteckschaum Anwendung finden. Die verwendeten Polyole enthalten ethylenoxidhaltige Innenblöcke. Durch die verwendeten hohen Wasseranteile kann es zu entsprechenden Kernverbrennungen kommen.

In US-A-4996310 werden Hartschaumpolyetherole mit hohen Ethylenoxidgehalten geschützt. Diese Polyole mit Ethylenoxidendblock sollen u.a. auch für Hartschaumanwendungen geeignet sein. In der Regel sind bei derartigen Anwendungen die Reaktivitätsprobleme nicht mehr beherrschbar.

In EP-A-463493 werden wassergetriebene Hartschäume offenbart. Diese bei höheren Kennzahlen erzeugten PUR-PIR-Schäume verwenden in geringen Anteilen Slab-Polyetherole mit geringen Ethylenoxidanteilen.

EP-A-1043350 verwendet als Vergleichsbeispiel anteilig ein ethylenoxidreiches Polyol. Bevorzugt eingesetzt werden Polyetheralkohole auf Basis Propylenoxid mit TDA als Startermaterial.

DE-A-19853025 setzt auf eine Kombination aus propylenoxidhaltigen Polyetherolen und Anteilen eines aromatischen Polyesteralkohols, wobei noch Flammschutzmittel mitverwendet werden.

In WO-A-9734946 und EP-A-886665 werden Hartschäume beschrieben, die auch EO-haltige Polyole verwenden. Diese Formulierungen sind nur mit speziellen Isocyanaten und auch nur dann verarbeitbar, wenn eine Grenzflächenspannung von 6 bis 14 mN/m (4 bis 8 mN/m für die Isocyanat-Seite) eingehalten wird, da in entgegenstehendem Falle ein Schaumkollaps eintritt. Das stellt einen schwerwiegenden Mangel dieses Systems dar.

In US-A-2902478 werden Hartschaumpolyetherole beschrieben, die durch Festphasensynthese hergestellt werden. Um dieses Verfahren technisch durchführen zu können, wurden auch Ethylenoxidaddukte hergestellt.

US-A-3153002 offenbart Hartschäume, die vorwiegend unter Verwendung von TDI hergestellt wurden. Dabei werden auch Polyetherole auf Basis von Propylenoxid und Ethylenoxid beschrieben, wobei die Reaktivität derartiger Kombinationen schwer zu steuern ist.

Nach dem vorliegenden Stand der Technik ist es schwierig, unter Verwendung von ethylenoxidreichen Polyetherolen, die zudem deutliche Anteile an primären OH-Gruppen aufweisen, hochwertige geschlossenzellige Hartschaumstoffe bei hinreichender Steuerung der Systemreaktivität zu erhalten.

Es bestand demzufolge die Aufgabe, unter Verwendung ethylenoxidreicher Polyole Hartschaumstoffe herzustellen, die trotz der hohen Reaktivität der primären OH-Gruppen einen retardierten Start der Verschäumung aufweisen, was die Fließeigenschaften positiv beeinflusst.

Diese Aufgabe wurde überraschenderweise dadurch gelöst, dass ein Polyolgemisch (b) bestehend aus (b1), mindestens einem zwei- bis achtfunktionellen Polyetherol auf der Basis von Ethylenoxid und gegebenenfalls Propylenoxid und/oder Butylenoxid, wobei der Ethylenoxidanteil, bezogen auf die eingesetzte Gesamtmenge an Alkylenoxid, mehr als 30 Gew.-% beträgt, mit einer OH-Zahl von 200 bis 1300 mg KOH/g, und (b2), mindestens einem Polyetherol auf der Basis Propylenoxid und/oder Butylenoxid und gegebenenfalls Ethylenoxid mit einer OH-Zahl von 100 bis 1000 mg KOH/g, wobei der Ethylenoxidanteil höchstens 30 Gew.-% beträgt, eingesetzt wird. Durch die Verwendung der erfindungsgemäßen Kombination der Polyole (b) konnte das Reaktivitätsverhalten der Polyurethankomponente eingestellt werden, wodurch geschlossenzellige Hartschaumstoffe mit guten mechanischen Eigenschaften bei guter Prozessfähigkeit herstellbar waren.

Gegenstand der Erfindung ist demzufolge ein Verfahren zur Herstellung von reaktionsverzögerten Polyurethanhartschaumstoffen durch Umsetzung von organischen und/oder modifizierten organischen Polyisocyanaten (a) mit einem Polyolgemisch (b) und gegebenenfalls weiteren gegenüber Isocyanaten reaktive Wasserstoffatome aufweisenden Verbindungen (c) in Gegenwart von Wasser (d), Katalysatoren (e), Flammschutzmitteln (f), Treibmitteln (g) und gegebenenfalls weiteren Hilfs- und Zusatzstoffen (h), das dadurch gekennzeichnet ist, dass das Polyolgemisch (b) besteht aus
b1) mindestens einem zwei- bis achtfunktionellen Polyetherol auf der Basis von Ethylenoxid und gegebenenfalls Propylenoxid und/oder Butylenoxid, wobei der Ethylenoxidanteil, bezogen auf die eingesetzte Gesamtmenge an Alkylenoxid, mehr als 30 Gew.-% beträgt, mit einer OH-Zahl von 200 bis 1300 mg KOH/g und
b2) mindestens einem Polyetherol auf der Basis Propylenoxid und/oder Butylenoxid und gegebenenfalls Ethylenoxid mit einer OH-Zahl von 100 bis 1000 mg KOH/g, wobei der Ethylenoxidanteil höchstens 30 Gew.-% beträgt.

Gegenstände der Erfindung sind weiterhin die so hergestellten reaktionsverzögerten Polyurethanhartschaumstoffe selbst sowie deren Verwendung als Isolier-, Konstruktions- und Verpackungsmaterial.

Wir fanden bei unseren Untersuchungen überraschenderweise, dass durch den Einsatz der erfindungsgemäßen Kombination der Polyole (b) in Verbindung mit den übrigen Komponenten die Polyurethanbildungsreaktion reaktionsverzögert und damit kontrolliert abläuft und somit ein Polyurethanhartschaum resultiert, der gute mechanische Eigenschaften und eine niedrige Wärmeleitfähigkeit besitzt und insbesondere eine lange Startzeit aufweist.

Unter "reaktionsverzögert" versteht man die Möglichkeit, in Rezepturen, die hohe Anteile an reaktiven Polyolen (primäre OH-Gruppen) enthalten, bei Sicherung einer guten Aushärtung eine gute Fließfähigkeit und eine langsame Startzeit realisieren zu können.

Der Fachmann hätte eigentlich erwarten müssen, dass derartige Polyolkomponenten aufgrund des hohen Anteils an primären OH-Gruppen nicht als Hartschaum mit hinreichenden Verarbeitungseigenschaften anwendbar sein würden. Insbesondere konnte man davon ausgehen, dass sich Start-, Abbindezeit und Steigzeit im gleichen Verhältnis ändern. Wir fanden überraschenderweise, dass bei festgelegter Abbindezeit eine Verlängerung der Startzeit erzielt werden konnte.

Zu den erfindungsgemäß im Polyolgemisch eingesetzten Komponenten ist Folgendes auszuführen:

Der Bestandteil (b1) besteht aus mindestens einem zwei bis achtfunktionellen Polyetherol auf der Basis von Ethylenoxid und gegebenenfalls Propylenoxid und/oder Butylenoxid, wobei der Ethylenoxidanteil, bezogen auf die eingesetzte Gesamtmenge an Alkylenoxid, mehr als 30 Gew.-%, vorzugsweise mehr als 80 Gew.-%, besonders bevorzugt 100 Gew.-%, beträgt. Die Polyetherole (b1) weisen eine OH-Zahl von 200 bis 1300 mg KOH/g, vorzugsweise von 400 bis 700 mg KOH/g, auf. Der Anteil an primären OH-Gruppen beträgt dabei vorzugsweise mehr als 30 %, besonders bevorzugt 100 %.

Beispielsweise kommen als (b1) hierfür in Betracht: Polyetheralkohole auf Basis Trimethylolpropan, Glycerin, Pentaerythrit, Saccharose, Wasser, TDA, MDA, Phenol-Mannichkondensate oder Sorbit als Starter (mit einem Ethylenoxidendblock oder mit einem statistischen Einbau des Ethylenoxids). Vorzugsweise werden Polyetherole auf Basis von Glycerin, Trimethylolpropan oder Sorbit mit Ethylenoxid eingesetzt.

Der Bestandteil (b2) besteht aus mindestens einem Polyetherol auf der Basis Propylenoxid und/oder Butylenoxid und gegebenenfalls Ethylenoxid mit einer OH-Zahl von 100 bis 1000 mg KOH/g, vorzugsweise von 50 bis 500 mg KOH/g, wobei der Ethylenoxidanteil höchstens 30 Gew.-% beträgt.

Beispielsweise kommen als (b2) hierfür in Betracht: Polyetherole, basierend auf Propylenglykol, Dipropylenglykol, Glycerin, Ethylendiamin, Toluylendiamin, Sorbit und Saccharose als Starter. Vorzugsweise werden Polyetherole auf Basis von Toluylendiamin, Ethylendiamin oder Saccharose mit einem Ethylenoxidgehalt von weniger als 30 Gew.-% eingesetzt.

Der Anteil der Komponente (b1) am Gesamtgewicht der Komponente (b) beträgt vorzugsweise mindestens 50 Gew.-%, besonders bevorzugt mehr als 60 Gew.-%.

Dabei sollte der Anteil der Komponente (b1) am Gesamtgewicht der Komponenten (b) bis (h) vorzugsweise mehr als 30 Gew.-%, besonders bevorzugt mehr als 60 Gew.-% und insbesondere mehr als 65 Gew.-% ausmachen.

Die genannten Polyetherole werden nach bekannten Verfahren, wie sie beispielsweise weiter unten beschrieben sind, hergestellt.

Die erfindungsgemäßen reaktionsverzögerten Polyurethanhartschaumstoffe werden durch Umsetzung von organischen und/oder modifizierten organischen Polyisocyanaten (a) mit dem oben beschriebenen Polyolgemisch (b) und gegebenenfalls weiteren gegenüber Isocyanaten reaktive Wasserstoffatome aufweisenden Verbindungen (c) in Gegenwart von Wasser (d), Katalysatoren (e), Flammschutzmitteln (f), Treibmitteln (g) und gegebenenfalls weiteren Hilfs- und Zusatzstoffen (h) hergestellt.

Die Schaumstoffe werden dabei erfindungsgemäß bei Kennzahlen von 70 bis 150, vorzugsweise kleiner von 90 bis 110, hergestellt.

Zu den verwendbaren weiteren Ausgangskomponenten ist im Einzelnen Folgendes auszuführen:

Als organische und/oder modifizierte organische Isocyanate (a) zur Herstellung der erfindungsgemäßen Polyurethanhartschaumstoffe kommen die an sich bekannten aliphatischen, cycloaliphatischen, araliphatischen und vorzugsweise aromatischen mehrwertigen Isocyanate in Frage.

Im Einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4,2-Methylpentamethylendiisocyanat-1,5, Tetramethylendiisocyanat-1,4 und vorzugsweise Hexamethylendiisocyanat-1,6, cycloaliphatische Diisocyanate, wie Cyclohexan-1,3- und -1,4-diisocyanat sowie beliebige Gemische dieser Isomeren, l-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'und 2,4'-Dicyclohexylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im Einzelnen kommen beispielsweise in Betracht: modifiziertes 4,4'-Diphenylmethandiisocyanat, modifizierte 4,4'- und 2,4'-Diphenylmethandiisocyanatmischungen, modifiziertes Roh-MDI oder 2,4- bzw. 2,6-Toluylendiisocyanat, Urethangruppen enthaltende organische, vorzugsweise aromatische Polyisocyanate mit NCO-Gehalten von 43 bis 15 Gew.-%, vorzugsweise von 31 bis 21 Gew.-%, bezogen auf das Gesamtgewicht, beispielsweise Umsetzungsprodukte mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, wobei diese als Di- bzw. Polyoxyalkylenglykole einzeln oder als Gemische eingesetzt werden können. Beispielsweise genannt seien: Diethylen-, Dipropylenglykol, Polyoxyethylen-, Polyoxypropylenund Polyoxypropylenpolyoxyethenglykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Bewährt haben sich ferner flüssige, Carbodiimidgruppen und/oder Isocyanuratringe enthaltende Polyisocyanate mit NCO-Gehalten von 43 bis 15, vorzugsweise 31 bis 21, Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylendiisocyanat.

Die modifizierten Polyisocyanate können miteinander oder mit unmodifizierten organischen Polyisocyanaten, wie z.B. 2,4'-, 4,4'-Diphenylmethandiisocyanat, Roh-MDI, 2,4- und/oder 2,6-Toluylendiisocyanat, gemischt werden.

Besonders bewährt haben sich als modifizierte organische Polyisocyanate NCO-gruppenhaltige Prepolymere, die vorteilhafterweise gebildet werden aus der Reaktion der Isocyanate (a) mit den Polyetherolen (b) sowie gegebenenfalls Verbindungen der Komponenten (c) und/oder (d) sowie (g).

Neben dem oben beschriebenen erfindungsgemäß eingesetzten Polyetherolgemisch (b) werden gegebenenfalls weitere gegenüber Isocyanaten reaktive Wasserstoffatome aufweisende Verbindungen (c) zugegeben.

Hierfür kommen vorrangig Verbindungen mit mindestens zwei reaktiven Wasserstoffatomen in Frage. Dabei werden zweckmäßigerweise solche mit einer Funktionalität von 2 bis 8, vorzugsweise 2 bis 3, und einem mittleren Molekulargewicht von 300 bis 8000, vorzugsweise von 300 bis 5000, verwendet. Die Hydroxylzahl der Polyhydroxylverbindungen beträgt dabei in aller Regel 20 bis 160 und vorzugsweise 28 bis 56.

Die in den Komponenten (b) und (c) verwendeten Polyetherpolyole werden nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium- oder Kaliumethylat oder Kaliumisopropylat als Katalysatoren und unter Zusatz mindestens eines Startermoleküls, das 2 bis 8, vorzugsweise 2 bis 3, reaktive Wasserstoffatome gebunden enthält, oder durch kationische Polymerisation mit Lewissäuren, wie Antimonpentachlorid, Borfluorid-Etherat u.a., oder Bleicherde als Katalysatoren oder durch Doppelmetallcyanidkatalyse aus einem oder mehreren Alkylenoxiden mit 2 bis 4 Kohlenstoffatomen im Alkylenrest hergestellt. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3-bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin und 4,4'-, 2,4'- und 2,2'-Diaminodiphenylmethan. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -2,3, Diethylenglykol, Dipropylenglykol, Butandiol-1,4, Hexandiol-1,6, Glycerin, Trimethylolpropan, Pentaerythrit. Vorzugsweise kommen höhermolekulare Starter, wie beispielsweise Sorbit, Saccharose und Toluylendiamin zum Einsatz.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, sowie Polyetherpolyoldispersionen.

Die Polyetherpolyole können einzeln oder in Form von Mischungen verwendet werden.

Neben den beschriebenen Polyetherpolyolen können beispielsweise auch Polyetherpolyamine und/oder weitere Polyole, ausgewählt aus der Gruppe der Polyesterpolyole, Polythioetherpolyole, Polyesteramide, hydroxylgruppenhaltigen Polyacetale und hydroxylgruppenhaltigen aliphatischen Polycarbonate oder Mischungen aus mindestens zwei der genannten Polyole verwendet werden. Die Hydroxylzahl der Polyhydroxylverbindungen beträgt dabei in aller Regel 20 bis 80 und vorzugsweise 28 bis 56.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen, nach üblichen Verfahren hergestellt werden. Üblicherweise werden die organischen Polycarbonsäuren und/oder -derivate und mehrwertigen Alkohole, vorteilhafterweise im Molverhältnis von 1:1 bis 1,8, vorzugsweise von 1:1,05 bis 1,2, katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C, gegebenenfalls unter vermindertem Druck bis zu der gewünschten Säurezahl, die vorteilhafterweise kleiner als 10, vorzugsweise kleiner als 2 ist, polykondensiert.

Als hydroxylgruppenhaltige Polyacetale kommen z.B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen. Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können. Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate. Geeignete Polyetherpolyamine können aus den obengenannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US-A-3267050) oder die teilweise oder vollständige Aminierung von Polyoxyalkylenpolyolen mit Aminen oder Ammoniak in Gegenwart von Wasserstoff und Katalysatoren (DE-A-1215373).

Die Verbindungen der Komponente (c) können einzeln oder in Form von Mischungen verwendet werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise 60 bis 300. In Betracht kommen beispielsweise aliphatische, cycloaliphatische und/oder araliphatische Diole mit 2 bis 14, vorzugsweise 4 bis 10, Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4- und 1,3,5-Trihydroxycyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern zur Herstellung der Polyurethanschaumstoffe Kettenverlängerungsmittel, Vernetzungsmittel oder Mischungen davon Anwendung finden, kommen diese zweckmäßigerweise in einer Menge von bis zu 20 Gew.-%, vorzugsweise von 1 bis 8 Gew.-%, bezogen auf das Gewicht der Komponente (b), zum Einsatz.

Zur Herstellung der erfindungsgemäßen Polyurethanhartschaumstoffe wird vorteilhafterweise Wasser (d) in einer Menge von 0,5 bis 5 Gew.-%, vorzugsweise 2 bis 3,5 Gew.-%, bezogen auf das Gewicht der Komponenten (b) bis (h) eingesetzt.

Als Katalysatoren (e) werden insbesondere Verbindungen verwendet, die die Reaktion der reaktiven Wasserstoffatome, insbesondere hydroxylgruppenenthaltender Verbindungen der Komponenten (b) und (c), mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat, und die Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, Dimethylcyclohexylamin, N-Methyl-, N-Ethyl-, N-Cyclohexylmorpholin, N,N,N',N'-Tetra-methylethylendiamn, N,N,N',N'-Tetramethylbutandiamin, N,N,N',N'-Tetramethyl-hexandiamin-1,6, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan, und Aminoalkanolverbindungen, wie Triethanolamin, Triisopropanolamin, N-Methyl- und N-Ethyldiethanolamin und Dimethylethanolamin. Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Erfindungsgemäß werden aminische Katalysatoren bevorzugt. Vorzugsweise verwendet werden 0,001 bis 5 Gew.-%, insbesondere 0,05 bis 2 Gew.-%, Katalysator bzw. Katalysatorkombination, bezogen auf das Gesamtgewicht der Komponenten (b) bis (h).

Geeignete Flammschutzmittel (f) sind beispielsweise Trikresylphosphat, Tris-(2-chlorethyl)phosphat, Tris-(2-chlorpropyl)-phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aliumiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanatpolyadditionsprodukte verwendet werden. Besonders wirksam erweisen sich dabei Zusätze an Melamin. Im Allgemeinen hat es sich als zweckmäßig erwiesen, 5 bis 50 Gew.-Teile, vorzugsweise 5 bis 25 Gew.-Teile, der genannten Flammschutzmittel für jeweils 100 Gew.-Teile der Aufbaukomponenten (b) bis (h) zu verwenden.

Als Treibmittel (g) werden neben Wasser auch andere aus der Polyurethanchemie allgemein bekannte Treibmittel eingesetzt. Dazu gehören die Fluorchlorkohlenwasserstoffe (FCKW) sowie hochund/oder perfluorierte Kohlenwasserstoffe, deren Einsatz jedoch aus ökologischen Gründen stark eingeschränkt bzw. ganz eingestellt werden soll. Neben den HFCKW und HFKW bieten sich insbesondere aliphatische und/oder cycloaliphatische Kohlenwasserstoffe, insbesondere Pentan und Cyclopentan, oder Acetale, wie z.B. Methylal, als Alternativtreibmittel an. Diese physikalischen Treibmittel werden üblicherweise der Polyolkomponente des Systems zugesetzt. Sie können jedoch auch in der Isocyanatkomponente oder als Kombination sowohl der Polyolkomponente als auch der Isocyanatkomponente zugesetzt werden. Möglich ist auch ihre Verwendung zusammen mit hoch- und/oder perfluorierten Kohlenwasserstoffen in Form einer Emulsion der Polyolkomponente. Als Emulgatoren, sofern sie Anwendung finden, werden üblicherweise oligomere Acrylate eingesetzt, die als Seitengruppen Polyoxyalkylen- und Fluoralkanreste gebunden enthalten und einen Fluorgehalt von ungefähr 5 bis 30 Gew.-% aufweisen. Derartige Produkte sind aus der Kunststoffchemie hinreichend bekannt, z.B. aus EP-A-351614.

Möglich ist auch die Verwendung von Carbonsäuren, wie z.B. Ameisensäure, als Treibmittel.

Vorteilhafterweise wird Wasser im Gemisch mit einer Mischung aus Cyclopentan und Isopentan oder Cyclopentan und Butan eingesetzt.

Die eingesetzte Gesamtmenge des Treibmittels bzw. der Treibmittelmischung beträgt dabei 1 bis 35 Gew.-%, vorzugsweise 1 bis 25 Gew.-%, jeweils bezogen auf das Gesamtgewicht der Komponenten (b) bis (h).

Der Reaktionsmischung zur Herstellung der erfindungsgemäßen Polyurethanhartschaumstoffe können neben den weiter oben beschriebenen Komponenten noch weitere Hilfsmittel und/oder Zusatzstoffe (h) zugesetzt werden. Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze der Ricinusölsulfate, oder von Fettsäuren sowie Salzen von Fettsäuren mit Aminen, z.B. ölsaures Diethylamin, stearinsaures Diethanolamin, ricinolsaures Diethanolamin, Salze von Sulfonsäuren, z.B. Alkalioder Ammoniumsalze von Dodecylbenzol- oder Dinaphthylmethandisulfonsäure und Ricinolsäure, Schaumstabilisatoren, wie Siloxanoxalkylenmischpolymerisate und andere Organopolysiloxane, oxethylierte Alkylphenole, oxethylierte Fettalkohole, Paraffinöle, Ricinusöl-, bzw. Ricinolsäureester, Türkischrotöl und Erdnussöl, und Zellregler, wie Paraffine, Fettalkohole und Dimethylpolysiloxane. Als Stabilisatoren kommen häufig Organopolysiloxane zur Anwendung, die zumindest teilweise wasserlöslich sind. Dabei handelt es sich um Polydimethylsiloxanreste, an denen eine Polyetherkette aus Ethylenoxid und Propylenoxid angepfropft ist. Die oberflächenaktiven Substanzen werden üblicherweise in Mengen von 0,01 bis 5 Gew.-Teilen, bezogen auf 100 Gew.-Teile der Aufbaukomponenten (b) bis (h), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe, wie silikatische Mineralien, beispielsweise Schichtsilikate, wie Antigorit, Serpentin, Hornblenden, Ampibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metallund insbesondere Glasfasern verschiedener Länge, die gegebenenfalls geschlichtet sein können. Als organische Füllstoffe kommen beispielsweise in Betracht: Kohle, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern. Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (h), einverleibt, wobei jedoch der Gehalt an Matten, Vliesen und Geweben aus natürlichen und synthetischen Fasern Werte bis 80 erreichen kann.

Nähere Angaben über die oben genannten anderen üblichen Hilfsund Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem oben zitierten Kunststoffhandbuch, Polyurethane, Band VII, Hanser-Verlag München, Wien, 1. bis 3. Auflage, zu entnehmen.

Zur Herstellung der erfindungsgemäßen Polyurethanhartschaumstoffe werden die organischen und/oder modifizierten organischen Polyisocyanate (a), das Polyolgemisch (b) und die gegebenenfalls weiteren Verbindungen mit mindestens zwei reaktiven Wasserstoffatomen (c) in solchen Mengen zur Umsetzung gebracht, dass das Äquivalenzverhältnis von NCO-Gruppen der Polyisocyanate (a) zur Summe der reaktiven Wasserstoffatome der Komponenten (b) und (c) 0,80 bis 1,20:1, vorzugsweise 0,90 bis 1,10:1, beträgt.

Polyurethanschaumstoffe nach dem erfindungsgemäßen Verfahren werden vorteilhafterweise nach dem one-shot-Verfahren, beispielsweise mit Hilfe der Hochdruck- oder Niederdruck-Technik in offenen oder geschlossenen Formwerkzeugen, beispielsweise metallischen Formwerkzeugen hergestellt. Üblich ist auch das kontinuierliche Auftragen des Reaktionsgemisches auf geeignete Bandstraßen zur Erzeugung von Schaumblöcken.

Als besonders vorteilhaft hat es sich erwiesen, nach dem Zweikomponentenverfahren zu arbeiten und die Aufbaukomponenten (b) bis (h) zu einer sogenannten Polyolkomponente, oft auch als Komponente A bezeichnet, zu vereinigen und als Isocyanatkomponente, oft auch als Komponente B bezeichnet, die organischen und/oder modifizierten organischen Polyisocyanate (a), besonders bevorzugt ein NCO-Prepolymer oder Mischungen aus diesem Prepolymeren und weiteren Polyisocyanaten, und gegebenenfalls Treibmitteln zu verwenden.

Die Polyolkomponente, bestehend aus zumindest Teilen der Aufbaukomponenten (b) bis (g) und gegebenenfalls (h), bildet bei Mitverwendung von Kohlenwasserstoffen als Zusatztreibmittel eine Emulsion. Diese Emulsion ist ohne Mitverwendung von Emulgatoren nur unter Rührbedingungen stabil. Sie ist beliebig wieder aufrührbar.

Die nach dem erfindungsgemäßen Verfahren hergestellten Polyurethanhartschaumstoffe weisen eine Dichte von 10 bis 800 kg/m³, vorzugsweise von 20 bis 100 kg/m³ und insbesondere von 25 bis 80 kg/m³, auf. Als besonders vorteilhaft hat es sich erwiesen, dass trotz des Vorhandenseins der hohen Anteile an primären OH-Gruppen ein gutes Fließverhalten, eine gute Aushärtung und eine gute Wärmeleitfähigkeit zu verzeichnen sind. Hervorzuheben ist dabei die verlängerte Startzeit, die einen anwendungstechnischen Vorteil darstellt.

Besonders eignen sie sich als Isolier-, Konstruktions- und Verpackungsmaterial.

Die vorliegende Erfindung soll anhand der angeführten Beispiele erläutert werden, ohne jedoch hierdurch eine entsprechende Eingrenzung vorzunehmen.

### Beispiele

Die Beispiele 6, 7 und 8 sind Vergleichsbeispiele.

| Bestandteil | Einheit | Beispiele | | | | | | | | |
|---|---|---|---|---|---|---|---|---|---|---|
| | | 1 | 2 | 3 | 4 | 5 | 6 | 7 | 8 9 | |
| Polyol b1 | Gew.-T1. | 72,4 | 72,4 | 72,4 | 72,4 | 72,4 | | | | 72,4 |
| Polyol b2a | Gew.-T1. | | | | | | 72,4 | 72,4 | 72,4 | |
| Polyol b2b | Gew.-T1. | 21,25 | 21,25 | 21,25 | 21,25 | 21,25 | 21,25 | 21,25 | 21,25 | 21,25 |
| DMCHA | Gew.-T1. | 0,25 | 0,5 | 0,5 | 0,3 | 0,4 | 0,7 | 0,8 | 0,8 | 0,4 |
| N 201 | Gew.-T1. | 0,2 | 0,2 | 0,2 | 0,2 | 0,2 | 0,7 | 0,7 | 0,7 | |
| N 206 | Gew.-T1. | 0,15 | 0,15 | 0,15 | 0,15 | 0,15 | 0,7 | 0,7 | 0,7 | 0,4 |
| B 8468 | Gew.-T1. | 2,5 | 2,5 | 2,5 | 2,5 | 2,5 | 2,5 | 2,5 | 2,5 | 2,5 |
| Wasser | Gew.-T1. | 3 | 2 | 2 | 2 | 2 | 3 | 2 | 2 | 2,3 |
| Cyclopentan | Gew.-T1. | | 13 | 3 | 13 | 13 | | 13 | 3 | 15 |
| Startzeit | s | 23 | 26 | 24 | 32 | 32 | 7 | 7 | 7 | 18 |
| Abbindezeit | s | 42 | 50 | 41 | 65 | 59 | 41 | 51 | 41 | 51 |
| Steigzeit | s | 56 | 68 | 55 | 93 | 93 | 57 | 81 | 73 | 70 |
| Rohdichte | g/cm3 | 52,2 | 32,8 | 52,6 | 33,9 | 33,8 | 48,8 | 30,6 | 50,6 | 28,4 |
| Bolzentest (5 min) | N | 108 | 71 | 113 | 72 | 74 | 169 | 93 | 170 | 77 |

Die Reaktionszeiten der Schäume wurden auf gleiche Abbindezeit eingestellt.
- B-Komponente:: Lupranat® M20S, Polyphenylenpolymethylenpolyisocyanat, NCO-Gehalt 31,6 Gew.-% (BASF); Kennzahl 105;
- Polyol b1 -: OH-Zahl 605 mg KOH/g, Polyetheralkohol auf Basis von Ethylenoxid, Starter Trimethylolpropan (BASF);
- Polyol b2a -: OH-Zahl 400 mg KOH/g, Polyetheralkohol auf Basis von Propylenoxid und Ethylenoxid (22 Gew.-%), Starter TDA (BASF);
- Polyol b2b -: OH-Zahl 470 mg KOH/g, Polyetheralkohol auf Basis von Propylenoxid, Starter Ethylendiamin (BASF);
- DMCHA -: Katalysator (BASF);
- N 201, N 206 -: Lupragen® N 201, N 206 - Katalysatoren (BASF);
- B 8467 -: Silikonstabilisator (Goldschmidt);
- Bolzentest:: Bestimmung der Aushärtung durch Eindrücken eines Bolzens und Messen der Kraft.

## Patentansprüche

1. Verfahren zur Herstellung von reaktionsverzögerten Polyurethanhartschaumstoffen durch Umsetzung von organischen und/oder modifizierten organischen Polyisocyanaten (a) mit einem Polyolgemisch (b) und gegebenenfalls weiteren gegenüber Isocyanaten reaktive Wasserstoffatome aufweisenden Verbindungen (c) in Gegenwart von Wasser (d), Katalysatoren (e), Flammschutzmitteln (f), Treibmitteln (g) und gegebenenfalls weiteren Hilfs- und Zusatzstoffen (h), **dadurch gekennzeichnet, dass** das Polyolgemisch (b) besteht aus
b1) mindestens einem zwei- bis achtfunktionellen Polyetherol auf der Basis von Ethylenoxid und gegebenenfalls Propylenoxid und/oder Butylenoxid, wobei der Ethylenoxidanteil, bezogen auf die eingesetzte Gesamtmenge an Alkylenoxid, mehr als 30 Gew.-% beträgt, mit einer OH-Zahl von 200 bis 1300 mg KOH/g und
b2) mindestens einem Polyetherol auf der Basis Propylenoxid und/oder Butylenoxid und gegebenenfalls Ethylenoxid mit einer OH-Zahl von 100 bis 1000 mg KOH/g, wobei der Ethylenoxidgehalt höchstens 30 Gew.-% beträgt.

2. Verfahren nach Anspruch 1, **dadurch gekennzeichnet, dass** das Polyetherol (b1) einen Ethylenoxidanteil, bezogen auf die eingesetzte Gesamtmenge an Alkylenoxid, von mehr als 60 Gew.-% aufweist.

3. Verfahren nach Anspruch 1 oder 2, **dadurch gekennzeichnet, dass** das Polyetherol (b1) einen Anteil an primären OH-Gruppen von mehr als 30 % aufweist.

4. Verfahren nach einem der Ansprüche 1 bis 3, **dadurch gekennzeichnet, dass** das Polyetherol (b1) in Anteilen von mehr als 30 Gew.-%, vorzugsweise mehr als 60 Gew.-%, bezogen auf das Gesamtgewicht der Komponenten (b) bis (h), verwendet wird.

5. Verfahren nach einem der Ansprüche 1 bis 4, **dadurch gekennzeichnet, dass** das Polyol (b1) in Anteilen von mindestens 50 Gew.-%, bezogen auf das Gesamtgewicht der Komponente (b), verwendet wird.

6. Verfahren nach einem der Ansprüche 1 bis 5, **dadurch gekennzeichnet, dass** als Treibmittel Gemische aus Cyclopentanen und/oder aliphatischen Kohlenwasserstoffen und/oder HFKW verwendet werden.

7. Verfahren nach einem der Ansprüche 1 bis 6, **dadurch gekennzeichnet, dass** die Polyolkomponente, bestehend aus zumindest Teilen der Aufbaukomponenten (b) bis (h), eine Emulsion bildet.

8. Verfahren nach einem der Ansprüche 1 bis 7, **dadurch gekennzeichnet, dass** als organische und/oder modifizierte organische Polyisocyanate (a) Toluylendiisocyanat, Gemische aus Diphenylmethandiisocyanat-Isomeren, Gemische aus Diphenylmethandiisocyanat und Polyphenylpolymethylpolyisocyanat oder Toluylendiisocyanat mit Diphenylmethandiisocyanat und insbesondere Polyphenylpolymethylpolyisocyanat eingesetzt werden.

9. Verfahren nach einem der Ansprüche 1 bis 8, **dadurch gekennzeichnet, dass** als organische und/oder modifizierte organische Polyisocyanate (a) NCO-gruppenhaltige Prepolymere, gebildet durch Umsetzung von Isocyanaten mit den Polyetherolen (b) sowie gegebenenfalls Verbindungen der Komponenten (c) und/oder (d), eingesetzt werden.

10. Reaktionsverzögerte Polyurethanhartschaumstoffe, herstellbar nach einem der Ansprüche 1 bis 9.

11. Verwendung der Polyurethanhartschaumstoffe gemäß Anspruch 10 als Isolier-, Konstruktions- und Verpackungsmaterial.
